(19) Europäisches Patentamt
European Patent Office
Office européen des brevets

(11) **EP 4 604 511 A1**

(12) **EUROPEAN PATENT APPLICATION**

(43) Date of publication:
**20.08.2025 Bulletin 2025/34**

(21) Application number: **25152475.7**

(22) Date of filing: **17.01.2025**

(51) International Patent Classification (IPC):
*H04M 9/08* (2006.01)        *H04R 3/00* (2006.01)
*H04S 7/00* (2006.01)        *G10L 21/0208* (2013.01)

(52) Cooperative Patent Classification (CPC):
**H04R 3/005; H04M 9/082; H04S 7/301;**
G10L 2021/02082; H04R 2420/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2024 GB 202402195**

(71) Applicant: **Nokia Technologies Oy
02610 Espoo (FI)**

(72) Inventors:
• **VILERMO, Miikka Tapani
Siuro (FI)**
• **MÄKINEN, Jorma Juhani
Tampere (FI)**

(74) Representative: **Nokia EPO representatives
Nokia Technologies Oy
Karakaari 7
02610 Espoo (FI)**

(54) **MICROPHONE SIGNAL ATTENUATION**

(57)     Various example embodiments relate to microphone signal attenuation. An example method may comprise receiving one or more microphone signals from respective microphones for capturing first and second audio signals output by respective first and second loudspeakers and correlating a first combination of the first and second audio signals with the one or more microphone signals. The method may also comprise determining a time delay at which the first combination of the first and second audio signals is most similar to the one or more microphone signals. The method may also comprise aligning, or causing alignment of, the first and second audio signals to the one or more microphone signals based on the time delay, and attenuating, or causing attenuation of, the one or more microphone signals by an attenuation amount determined based at least in part on a second combination of the aligned first and second audio signals.

FIG. 1

EP 4 604 511 A1

## Description

### Field

Various example embodiments relate to microphone signal attenuation.

### Background

A user may sometimes listen to audio whilst a nearby microphone is enabled for voice capture. For example, in a communications session between two users, captured audio of a first user may be transmitted in one or more signals to a second user. The received one or more signals may be output by one or more loudspeakers associated with the second user. For example, the one or more loudspeakers may comprise a set of earphones or similar. The second user may operate an audio capture device comprising one or more microphones for capturing their own audio for transmitting back to the first user as part of the communications session. At least some of audio signals of the first user, when output by the one or more loudspeakers, may be captured by the one or more microphones of the audio capture device and hence the first user may hear an echo of their own voice and/or other feedback that may get progressively worse.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for receiving one or more microphone signals from respective microphones for capturing first and second audio signals output by respective first and second loudspeakers; means for correlating a first combination of the first and second audio signals with the one or more microphone signals; means for determining a time delay at which the first combination of the first and second audio signals is most similar to the one or more microphone signals; means for causing alignment of the first and second audio signals to the one or more microphone signals based on the time delay; and means for causing attenuation of the one or more microphone signals by an attenuation amount determined based at least in part on a second combination of the aligned first and second audio signals.

In some example embodiments, the first combination of the first and second audio signals may comprise a weighted sum of the first and second audio signals.

In some example embodiments, one or both of the first and second audio signals of the first combination may have a smaller gain than the aligned first and second audio signals of the second combination.

In some example embodiments, the means for correlating may be configured to perform cross-correlation of the first combination of the first and second audio signals with the one or more microphone signals to determine a maximum similarity value, and
wherein the time delay may be based on an amount of time shift of the first combination of the first and second audio signals relative to the one or microphone signals that produces the highest maximum similarity value.

In some example embodiments, the first combination of the first and second audio signals may be determined by correlating each of the one or more microphone signals with each of a set of first and second audio signal combinations, the first combination of the first and second audio signals being a combination which is most similar to at least one of the one or more microphone signals.

In some example embodiments, the attenuation amount may be further determined based on an amount of correlation between the one or more microphone signals and the first combination of the first and second audio signals.

In some example embodiments, the means for receiving may be configured to receive two or more microphone signals from two or more respective spaced-apart microphones. In some example embodiments, the two or more microphone signals may be individually attenuated using respective attenuation amounts.

In some example embodiments, the apparatus may further comprise means for converting the one or more microphone signals and the first combination of the first and second audio signals into frequency domain signals; and means for dividing the frequency domain signals into sub-bands covering respective frequency ranges, wherein correlating of the first combination of the first and second audio signals with the one or more microphone signals is performed for each sub-band. In some example embodiments, the attenuation amount may be determined for each sub-band.

In some example embodiments, the sub-bands may cover a frequency range of 1 - 5 KHz.

In some example embodiments, the attenuating the one or more microphone signals may be performed in the frequency domain, and the apparatus may further comprise: means for converting the attenuated one or more microphone signals to the time domain for output.

In some example embodiments, the attenuation amount may have a maximum value of 20 dB.

In some example embodiments, the apparatus may further comprise: means for transmitting data representing the first and second audio signals to an earphones device which comprises the respective first and second loudspeakers. In some example embodiments, the data may be transmitted over a wireless channel.

In some example embodiments, the apparatus may comprise a user device.

According to a second aspect, there is described a method, comprising: receiving one or more microphone signals from respective microphones for capturing first and second audio signals output by respective first and second loudspeakers; correlating a first combination of the first and second audio signals with the one or more microphone signals; determining a time delay at which the first combination of the first and second audio signals is most similar to the one or more microphone signals; causing alignment of the first and second audio signals to the one or more microphone signals based on the time delay; and causing attenuation of the one or more microphone signals by an attenuation amount determined based at least in part on a second combination of the aligned first and second audio signals.

In some example embodiments, the first combination of the first and second audio signals may comprise a weighted sum of the first and second audio signals.

In some example embodiments, one or both of the first and second audio signals of the first combination may have a smaller gain than the aligned first and second audio signals of the second combination.

In some example embodiments, correlating may comprise performing cross-correlation of the first combination of the first and second audio signals with the one or more microphone signals to determine a maximum similarity value, and wherein the time delay may be based on an amount of time shift of the first combination of the first and second audio signals relative to the one or microphone signals that produces the highest maximum similarity value.

In some example embodiments, the first combination of the first and second audio signals may be determined by correlating each of the one or more microphone signals with each of a set of first and second audio signal combinations, the first combination of the first and second audio signals being a combination which is most similar to at least one of the one or more microphone signals.

In some example embodiments, the attenuation amount may be further determined based on an amount of correlation between the one or more microphone signals and the first combination of the first and second audio signals.

In some example embodiments, two or more microphone signals may be received from two or more respective spaced-apart microphones. In some example embodiments, the two or more microphone signals may be individually attenuated using respective attenuation amounts.

In some example embodiments, the method may further comprise: converting the one or more microphone signals and the first combination of the first and second audio signals into frequency domain signals; and dividing the frequency domain signals into sub-bands covering respective frequency ranges, wherein the correlating of the first combination of the first and second audio signals with the one or more microphone signals is performed for each sub-band. In some example embodiments, the attenuation amount may be determined for each sub-band. In some example embodiments, the sub-bands may cover a frequency range of 1 - 5 KHz.

In some example embodiments, the attenuating the one or more microphone signals may be performed in the frequency domain, and the method may further comprise: converting the attenuated one or more microphone signals to the time domain for output.

In some example embodiments, the attenuation amount may have a maximum value of 20 dB.

In some example embodiments, the method may further comprise: transmitting data representing the first and second audio signals to an earphones device which comprises the respective first and second loudspeakers. In some example embodiments, the data may be transmitted over a wireless channel.

In some example embodiments, the method may be performed at a user device.

According to a third aspect, there is described a computer program product, comprising a set of instructions which, when executed on an apparatus, is configured to cause the apparatus to carry out a method, comprising receiving one or more microphone signals from respective microphones for capturing first and second audio signals output by respective first and second loudspeakers; correlating a first combination of the first and second audio signals with the one or more microphone signals; determining a time delay at which the first combination of the first and second audio signals is most similar to the one or more microphone signals; causing alignment of the first and second audio signals to the one or more microphone signals based on the time delay; and causing attenuation of the one or more microphone signals by an attenuation amount determined based at least in part on a second combination of the aligned first and second audio signals.

In some example embodiments, the third aspect may include any other feature mentioned with respect to the method of the second aspect.

According to a fourth aspect, there is described an apparatus comprising at least one processing core, at least one memory including computer program code, the at least one memory and the computer program code being configured to, with the at least one processing core, cause the apparatus to: receive one or more microphone signals from respective microphones for capturing first and second audio signals output by respective first and second loudspeakers; correlate a first combination of the first and second audio signals with the one or more microphone signals; determine a time delay at which the first combination of the first and second audio signals is most similar to the one or more microphone signals; causing alignment of the first and second audio signals to the one or more microphone signals based on the time delay; and causing attenuation of the one or more microphone signals by an attenuation amount determined based at least in part on a second combination of the aligned first and second audio signals.

In some example embodiments, the fourth aspect may include any other feature mentioned with respect to the method of the second aspect.

**Drawings**

Example embodiments will be described, by way of non-limiting example, with reference to the accompanying drawings, in which:

FIG. 1 illustrates a communications session between first and second users;
FIG. 2 illustrates a front view of the second user during output of audio signals by an audio output device;
FIG. 3 is a flow diagram showing operations according to one or more example embodiments;
FIG. 4 illustrates left and right -hand loudspeakers of the audio output device in relation to first and second microphones;
FIG. 5 illustrates example audio signal and microphone signal waveforms;
FIG. 6 illustrates an example correlation process for the FIG. 5 waveforms;
FIG. 7A illustrates alignment of audio signals and microphone signals in accordance with an example embodiment;
FIG. 7B illustrates alignment of audio signals and microphone signals in accordance with another example embodiment;
FIG. 8 illustrates an apparatus that may be configured in accordance with one or more example embodiments;
FIG. 9 illustrates a non-transitory computer-readable medium that more provide computer-readable instructions for causing the FIG. 8 apparatus to operate in accordance with one or more example embodiments.

**Detailed Description**

Various example embodiments relate to an apparatus, method and computer program for microphone signal attenuation, for example for mitigating against acoustic echo or other forms of unwanted audible feedback.

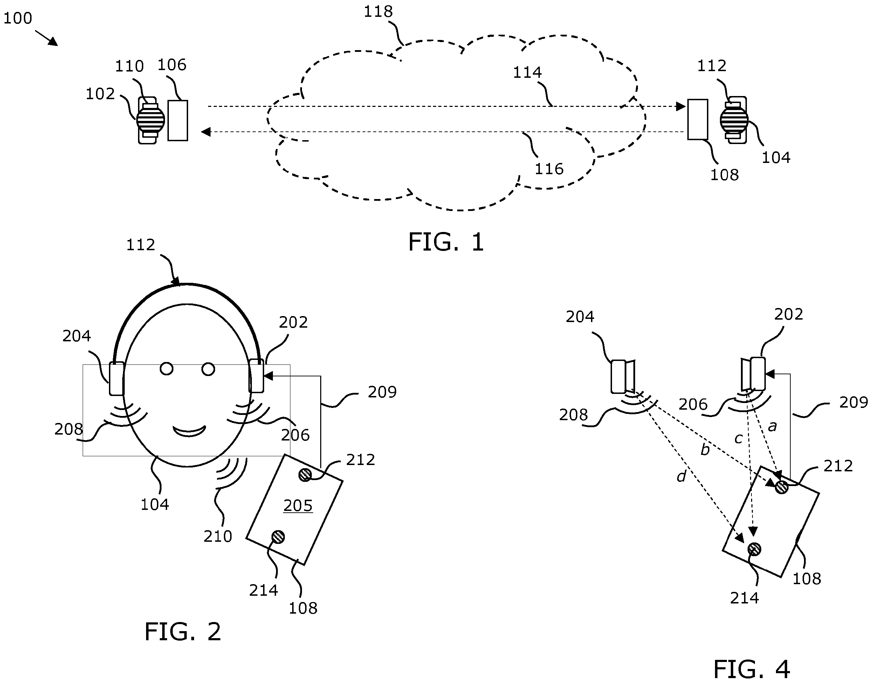

FIG. 1 shows an example scenario 100 in which a first user 102 and a second user 104 communicate as part of a communications session, for example a voice call. Other possible scenarios or use cases are described later on.

The first and second users 102, 104 may be provided with respective first and second user devices 106, 108. The first and second users 102, 104 may also be provided with respective first and second audio output devices 110, 112.

The first user device 106 may comprise one or more microphones for capture of audio, of the first user 102. The one or more microphones may produce respective microphone signals. The respective microphone signals may be encoded and transmitted in one or more uplink signals 114 to the second user device 108 via a network 118. The second user device 108 may cause output of the received one or more uplink signals 114 via the second audio output device 112. For example, the second user device 108 may communicate with the second audio output device 112 via a wired or wireless channel, e.g., using Bluetooth, Zigbee, WiFi or similar in the case of a wireless channel.

Similarly, the second user device 108 may comprise one or more microphones for capture of audio of the second user 104. The one or more microphones may produce respective microphone signals. The respective microphone signals may be encoded and transmitted as one or more downlink signals 116 to the first user device 106 via the network 118. The first user device 106 may cause output of the received one or more downlink signals via the first audio output device 110. For example, the first user device 106 may communicate with the first audio output device 110 via a wired or wireless link, e.g., using Bluetooth, Zigbee, WiFi or similar in the case of a wireless channel.

The network 118 may comprise an internet protocol (IP) network or other form of communications network, for example a Radio Access Network (RAN). Respective air interfaces between the first and second user devices 106, 108 and the network 118 may be in accordance with a cellular, or non-cellular, radio access technology (RAT) that both the first and second user devices and the network are configured to support. Examples of cellular RATs include Long Term Evolution (LTE) or fifth generation (5G) New Radio (NR) radio access technology, or 5G beyond, or sixth generation (6G) radio access technology or other communications technologies.

The first and second audio output devices 110, 112 may each comprise a set of first and second loudspeakers in any suitable form, for example a set of earphones, earbuds, headphones, or loudspeakers of a head-worn device such as an extended reality (XR) headset. The term earphones or earphones device will be used hereinafter. The first and second audio output devices 110, 112 may be of the same type or may be of different types.

The first and second user devices 106, 108 may comprise any device comprising one or more microphones (or devices connected to one or more remote microphones). The first and second user devices 106, 108 may, for example, each comprise a smartphone, tablet computer, personal computer, laptop computer, wearable computer or digital assistant. The first and second user devices 106, 108 may be of the same type or may be of different types.

FIG. 2 is a front view of the second user 104 during output of audio signals by the second audio output device 112. The second user device 108 may communicate with the second audio output device 112 using a wireless channel such as a Bluetooth channel 209. The second user device 108 is positioned at a spaced distance from, and generally in front of, the second user 104. The second audio output device 112 comprises an earphones device comprising left and right -hand loudspeakers 202, 204 which output respective audio sounds, which are referred to hereafter as first and second audio signals 206, 208. The second user device 108 may comprise a body 205on which is provided first and second spaced-apart microphones 212, 214 for capture of audio 210 of the second user 104. The first and second spaced-apart microphones 212, 214 produce first and second microphone signals. In other example embodiments, there may be one microphone or two or more microphones.

At least some energy of the first and/or second audio signals 206, 208 may be captured by the first and/or second microphones 212, 214 during output. If so, the downlink signal 116 transmitted by the second user device 108 will comprise some energy of the first and/or second audio signals 206, 208. The first user 102 may perceive acoustic echo, or other form of unwanted audible feedback, when said downlink signal 116 is output by the first audio output device 110.

The above scenario 100 in which the second user device 108 providing the one or more microphones 212, 214 is physically separate from the second audio output device 112 providing the left and right -hand loudspeakers 202, 204 is particularly, although not exclusively, useful for stereo or spatial audio capture and output. A known spatial audio codec, mentioned by way of example, is the Immersive Voice and Audio Services (IVAS) codec which has been standardized by the 3rd Generation Partnership Project (3GPP) for voice services. In terms of spatial audio output, the use of an earphones device, or similar, is generally preferred over output by means of stand-alone loudspeaker systems or those of user devices which tend to reproduce "tinny" sounds that lack reproduction at lower frequencies. Also, for user device loudspeakers, stereo or spatial reproduction is generally not well perceived due to said loudspeakers being relatively close together. In terms of spatial audio capture, user device microphones may be preferred over, for example, microphones that comprise part of an earphones device where the microphones will be relatively close to the user's head (with acoustic shadows from opposite sides of the user's head) and because the microphones may be relatively close to one another. There may be an unknown distance in-between microphones which depends on the size of the user's head.

In general, therefore, the use of separate audio capture and audio output devices is preferred for stereo or spatial audio capture and reproduction.

In such cases, conventional methods (such as Acoustic Echo Cancellation (AEC)) for mitigating acoustic echo or other audio feedback may not work effectively. This may be due, at least in part, to there being unknown delays between the user device wirelessly transmitting signals to the audio output device, e.g., via a Bluetooth channel, and delays associated with their subsequent processing and output. Conventional methods may also assume that the audio capture and audio output device comprise part of the same device which uses a common clock signal. Non-linearities may also be introduced due to the relatively lower bitrate used for wirelessly transmitting the one or more audio signals to the audio output device as well as processes such as equalization and/or compression that may be performed by the audio output device. In general, conventional methods may assume that sound paths from the first and second loudspeakers to the one or more microphones are relatively constant whereas, in cases where separate audio capture and audio output devices are used, these may change relatively abruptly and frequently.

Example embodiments may avoid or alleviate such issues.

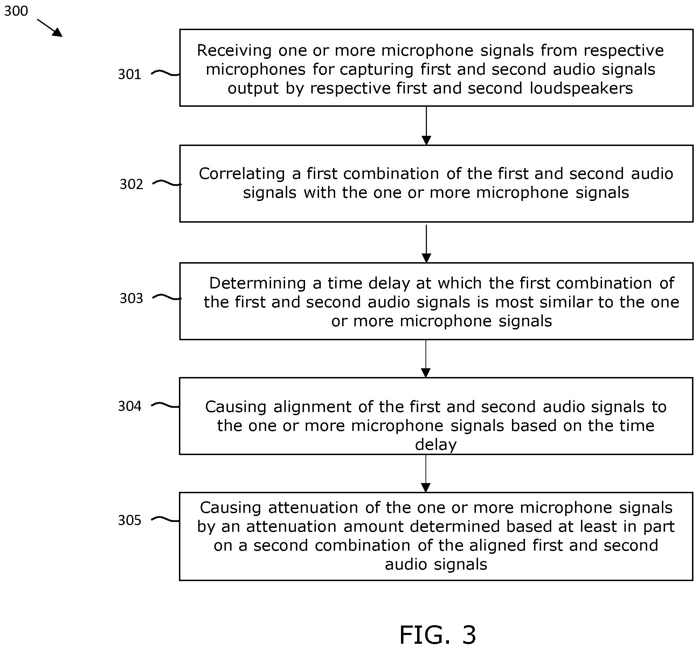

FIG. 3 is a flow diagram showing operations 300 according to one or more example embodiments. The operations 300 may be performed in hardware, software, firmware or a combination thereof. For example, the operations 300 may be performed individually, or collectively, by a means, wherein the means may comprise at least one processor and at least one memory storing instructions that, when executed by the at least one processor, cause the performance of the operations. The operations 300 may, for example, be performed by at least one of the first and second user devices 106, 108 described in relation to FIG 1.

A first operation 301 may comprise receiving one or more microphone signals from respective microphones for capturing first and second audio signals output by respective first and second loudspeakers.

A second operation 302 may comprise correlating a first combination of the first and second audio signals with the one or more microphone signals.

A third operation 303 may comprise determining a time delay at which the first combination of the first and second audio signals is most similar to one of the one or more microphone signals.

A fourth operation 304 may comprise causing alignment of the first and second audio signals to the one or more microphone signals based on the time delay.

A fifth operation 305 may comprise causing attenuation of the one or more microphone signals by an attenuation amount determined based at least in part on a second combination of the aligned first and second audio signals.

In some example embodiments, the first combination of the first and second audio signals (hereafter "first combination") may comprise a weighted sum of the first and second audio signals, e.g.:

$$Y = w1 \text{ (first audio signal)} + w2 \text{ (second audio signal)},$$

where $w1, w2$ are respective weights that may sum to one.

For example, the first combination may comprise one of the following (non-exhaustive) list of audio signal combinations, y, where the italic values represent respective weights:

**Tabel 1 - example set of audio signals**

| | | |
|---|---|---|
| *0.0* (first audio signal) | + | *1.0* (second audio signal); |
| *0.1* (first audio signal) | + | *0.9* (second audio signal); |
| *0.2* (first audio signal) | + | *0.8* (second audio signal); |
| *0.5* (first audio signal) | + | *0.5* (second audio signal); |
| *0.8* (first audio signal) | + | *0.2* (second audio signal); |
| *0.9* (first audio signal) | + | *0.1* (second audio signal); |
| *1.0* (first audio signal) | + | *0.0* (second audio signal). |

It will be seen that the first and last items of the table 1 list indicate that the first combination Y comprises, respectively, only the second audio signal and only the first audio signal. The other items indicate respective in-between weightings that combine some amount of both of the first and second audio signals.

In some example embodiments, one of the first and second audio signals of the first combination has a smaller gain than the aligned first and second audio signals of the second combination.

In some example embodiments, the correlating may comprise performing cross-correlation or a similar similarity function to determine a maximum similarity value.

In some example embodiments, the first combination may be determined by correlating each of the one or more microphone signals, x, with each audio signal combination, y, the first combination being determined as the audio signal combination which is most similar to at least one of the one or more microphone signals. Put another way, the first combination is that pairing of audio signal combination, y, to microphone signal, x, which produces the highest maximum similarity or correlation value.

For example, correlation may be performed for each of the following pairs (x, y) of microphone signal, x, and audio signal combination, y,:

**Table 2 - example correlations**

| | |
|---|---|
| x = first microphone signal, | y = first audio signal only; |
| x = second microphone signal, | y = first audio signal only; |
| x = first microphone signal, | y = second audio signal only; |
| x = second microphone signal, | y = second audio signal only; |
| x = first microphone signal, | y = first + second audio signal; and |
| x = second microphone signal, | y = first + second audio signal. |

The first four items of table 2 indicate correlations using, for y, only one of the first and second audio signals, as per the first and seventh items of table 1. The fifth and sixth items of table 2 indicate correlations using, for y, a particular sum of the first and second audio signals, as per the second to sixth items of table 1.

Having determined the first combination, the time delay may be determined based on an amount of time shift of the first combination relative to the microphone signal, x, that produced the highest maximum similarity value. The time delay is that referred to in the third operation 303.

FIG. 4 illustrates the FIG. 2 left and right -hand loudspeakers 202, 204 in relation to the first and second microphones 212, 214 during output of the first and second audio signals 206, 208.

The first microphone 212 may capture (at least some energy of) the first audio signal 206 and/or the second audio signal 208, indicated by respective first and second paths *a, b*. The first microphone 212 produces a first microphone signal which may include the captured first and/or second audio signals 206, 208. The second microphone 214 may capture (at least some energy of) the first audio signal 206 and/or the second audio signal 208, indicated by respective third and fourth paths *c, d*. The second microphone 214 produces a second microphone signal which may include the captured first and/or second audio signals 206, 208. In some cases, the first microphone 212 and/or the second microphone 214 may capture no energy of the first audio signal 206 or the second audio signal 208.

Acoustic echo may result if the first and/or second microphones 212, 214 "hear" the first and/or second audio signals 206, 208 which may be the case if some proportion of said signal(s) reaches said microphone(s) at a level above those of other sound sources, or up to 10 dB below the level of other sound sources, or otherwise above a level of internal noise or ambient noise associated with said microphones The length of paths a - d may differ greatly and may change abruptly and frequently depending on how the second user 104 positions and/or orients the second user device 108. For example, the first path a is clearly shorter than the fourth path d which means that the first microphone 212 will likely capture (or hear) more energy of the first audio signal 206 than the second audio signal 208. Echo effects are unlikely to be particularly strong (because, in the case of earphones devices at least, there is typically a low amount of audio leakage outside of the user's ears), and hence attenuation in accordance with the fifth operation 305 may only be required when the left and right -hand loudspeakers 202, 204 are relatively close (e.g., 1 metre or less) to the second user device 108, and possibly when there are no significant sound sources in the vicinity of the user device. This closeness can be identified based on there being a high correlation or similarity between the first combination and at least one of the first and second microphone signals.

In accordance with the second operation 302, from FIG. 4 it may be expected that the pair (x, y) of signals:

$$x = \text{first microphone signal}, \qquad y = \text{first audio signal},$$

will have the highest maximum similarity value.

In other words, the final item in table 1 may be determined as the first combination

$$(y = 1.0 \text{ (first audio signal)} + 0.0 \text{ (second audio signal)}).$$

The time delay may comprise the amount of time shift of the first audio signal 206 relative to the first microphone signal because it will produce the highest maximum similarity value.

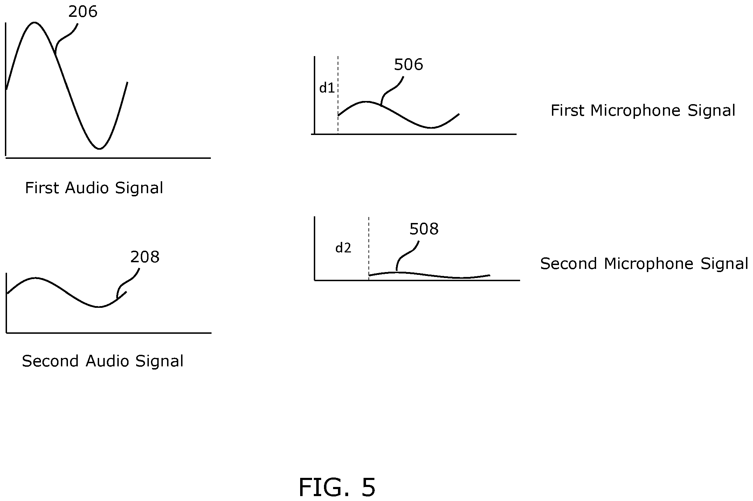

FIG. 5 shows example time domain waveforms for the first and second audio signals 206, 208 and first and second microphone signals 506, 508.

It will be seen that the first microphone signal 506 is an attenuated version of the first audio signal 206 with a certain time delay, $d1$, and the second microphone signal 508 is a more attenuated version of the first audio signal with a certain time delay, $d2$, where $d2 > d1$.

In this example, neither the first or second microphones 212, 214 captures, or hears, the second audio signal 208 although in other example embodiments the situation may be different.

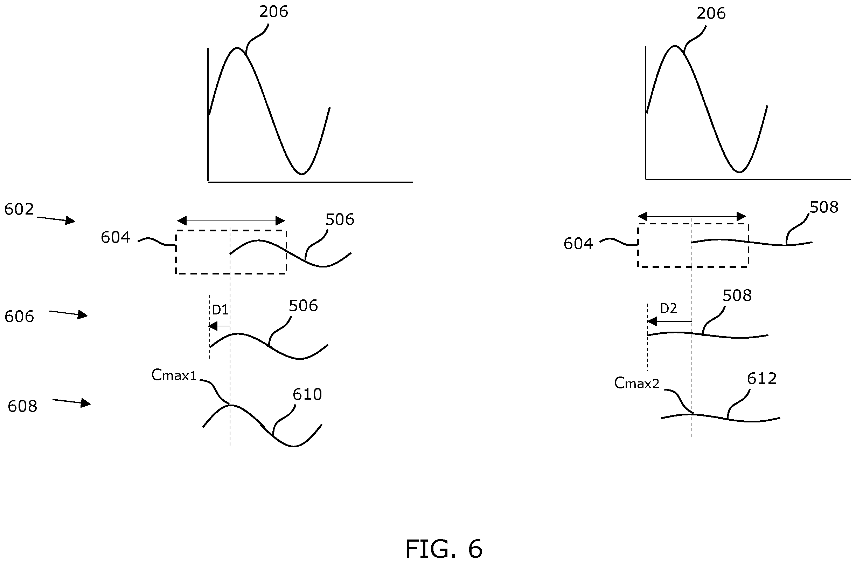

FIG. 6 illustrates how cross-correlation may be performed in the time domain for, by way of example, only two pairs (x, y) of signals namely:

$$x = \text{first microphone signal}, \qquad y = \text{first audio signal; and}$$
$$x = \text{second microphone signal}, \qquad y = \text{first audio signal}.$$

Reference numeral 602 indicates graphically how cross-correlation may be performed using a time window 604. The length of the time window 604 may be set, and therefore limited, based on an estimated time delay for data representing the first and second audio signals 206, 208 to arrive at the first and second microphones 206, 208. The time delay used for the time window 604 may, for example, comprise 3 ms (the approximate time it takes sound to travel 1 meter). This is because it may be assumed that the first and second microphones 212, 214 will not capture or hear the first and second audio signals 206, 208 if said microphones are more than 1 meter from the left and right -hand loudspeakers 202, 204. Additionally, there may be further delays due to the wireless channel (e.g., the Bluetooth channel 209) between the second user terminal 108 and the second audio output device 112 and also delays due to processing and/or buffering performed at the second audio output device. These delays may be longer than the above 3 ms delay which may be ignored in some cases. Assuming a worst case scenario, the time delay used for the time window 604 may be up to 400 ms. The time delay may typically be expected around 100 - 200 ms..

Reference numeral 606 indicates graphically respective first and second time delays, $D1, D2,$ when the maximum similarity (cross-correlation) is measured.

Reference numeral 608 indicates graphically approximate similarity or cross-correlation values, C, 610, 612 which may vary in value between 0 and 1, and the locations of respective maximum similarity (cross-correlation) values $Cmax1, Cmax2$.

In this simple example, therefore, the pair (x, y) of signals comprising:

$$x = \text{first microphone signal 506}, \qquad y = \text{first audio signal 206},$$

produces the highest maximum similarity/correlation value, because *Cmax1 > Cmax2.*

Hence the first combination will indeed comprise the final item in table 1:
1.0 (first audio signal) + 0.0 (second audio signal).

The time delay for the purposes of the third operation 303 may comprise at least the first time delay, *D1.*

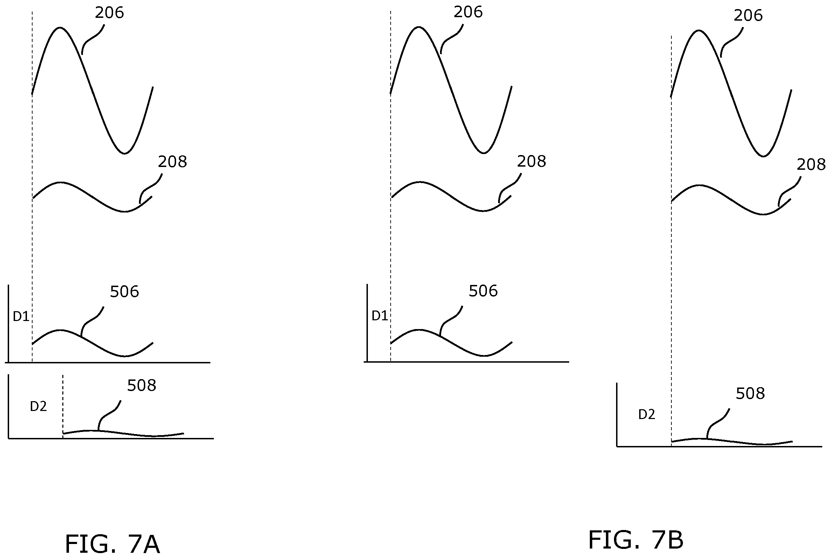

Referring to FIG. 7A, the first and second audio signals 206, 208 may be aligned with the first and second microphone signals 506, 508 based on the time delay, *D1.*

The first and second microphone signals 506, 508 may be attenuated by an attenuation amount A which is determined based at least in part on the second combination of the aligned first and second audio signals 206, 208.

The first and second audio signals 206, 208 may combine in unexpected ways during travel to the first and second microphones 212, 214, for example, due to characteristics of the user's head, the room in which the user is located and/or characteristics of the audio output device, which may cause reflections and dampening. The safest option may therefore be to individually attenuate all (in this case the first and second) microphone signals 506, 508, or at least those microphone signals where at least in one pairing the similarity value was above a threshold.

For the same reason, the attenuation amount A may be based on a worst-case combination of the first and second audio signals 206, 208, e.g., based on summing the aligned first and second audio signals 206, 208.

The second combination may therefore comprise a sum of the aligned first and second audio signals 206, 208 and the attenuation amount may be based at least in part on this sum.

In some example embodiments, the sum of the aligned first and second audio signals 206, 208 may be a weighted sum, e.g.,:

$$Y = w3 \text{ (first audio signal)} + w4 \text{ (second audio signal)},$$

where *w3, w4* are respective weights that may sum to one.

In some example embodiments, the respective weights *w3, w4* may both comprise 0.5. In this case, the second audio signal 208 will have a smaller gain in the first combination than in the second combination.

In some example embodiments, the respective weights *w3, w4* may be in the range of 0.3 to 0.7 so that their sum is 1.0.

In some example embodiments, in the first combination at least one of the weights *w3, w4* for one of the audio signals 206, 208 is smaller than the respective weight for the same audio signal in the second combination.

In some example embodiments, in the first combination at least one of the weights *w3, w4* for one of the audio signals 206, 208 is larger than the respective weight for the same audio signal in the second combination.

In some example embodiments, the respective weights *w3, w4* may be based on the amount of correlation between the one or more microphone signals 506, 508 and the first combination. In some example embodiments, the greater the correlation the greater the attenuation.

In some example embodiments, because the time delay, *D1*, is an estimate, the attenuation may be performed using relatively long time windows and/or smoothed envelopes instead of following the shape of the first and second audio signals 206, 208 quickly and accurately.

In some example embodiments, the correlation values C are smoothed over time using previous correlation estimates.

In some example embodiments, the attenuation amount A may have a maximum value of 5-20 dB.

In some example embodiments, the attenuation amount A may be determined on a per sub-band basis, e.g., for each sub-band.

In some example embodiments, the sub-bands may cover a frequency range of 1 - 5 KHz.

Referring to FIG. 7B, in an alternative example embodiment, the first and second audio signals 206, 208 may be aligned with the first and second microphone signals 506, 508 based on the respective first and second time delays, *D1, D2.* For example, the first and second audio signals 206, 208 may be aligned with the first microphone signal 506 based on the first time delay, *D1,* and the first and second audio signals may be aligned with the second microphone signal 506 based on the second time delay, *D2.* The respective weights *w3, w4* used for the first and second microphone signals 506, 508 may be based on the respective correlation highest similarity (correlation) values, i.e., based on *Cmax1* for the first microphone signal 506 and Cmax2 for the second microphone signal.

In some example embodiments, at least the attenuating of the first and second microphone signals 506, 508 may be performed in the frequency domain and the attenuated first and second microphone signals may thereafter be converted to the time domain for output.

In some example embodiments, the second to fifth operations 302 to 305 may be performed in the frequency domain as will now be described with a general example for determining the attenuation amount A.

In summary, microphone signals, x, and audio signals, y, may be framed, windowed (for example with a window 20 ms long and 50% overlapping) and converted into the frequency domain using, for example, a Fast Fourier Transform, FFT. Other transforms and/or filter banks may also be used.

The signals x and y may be divided into frequency sub-bands (for example, third octave, Bark and/or the like).

The signals $X_{i,j,k}$ and $Y_{i,j,k}$ may be derived where, i is a frame index, j is a subband index and k is a bin number in a given sub-band.

The correlation value C between the signals x and y may be computed as:

$$C(i,j) = \left\{ \frac{\sum_k X_{i,j,k} \cdot Y_{i,j,k}^*}{\sqrt{\sum_k X_{i,j,k}^2 \cdot \sum_k Y_{i,j,k}^2}} \right\} \quad (1\text{A})$$

Equation (1A) corresponds to a zero delay correlation. in some example embodiments, correlation with different delays may be calculated taking different time frame / data to one of the signals x or y where the different time frame I data is delayed compared to time frame i. For example:

$$C(i,j,l) = \left\{ \frac{\sum_k X_{l,j,k} \cdot Y_{i,j,k}^*}{\sqrt{\sum_k X_{l,j,k}^2 \cdot \sum_k Y_{i,j,k}^2}} \right\} \quad (1\text{B})$$

Differently delayed (0..400ms) time frames are tested to find the delay that gives the highest correlation.

The correlation value *C* for the pair of signals (x, y) that produces the highest maximum similarity/correlation value may be used.

In accordance with the third and fourth operations 303,304 the first and second audio signals may be aligned to the first and second microphone signals using the time delay that produced the highest maximum similarity value.

The aligned first and second audio signals may be combined to create a worst-case safety energy calculation. For example, the aligned first and second audio signals energies may be summed for each frame and frequency band, as:

$$S(i,j) = 10\log_{10}\left(\sum_k L_{i,j,k}^2 + \sum_k R_{i,j,k}^2\right) \quad (2)$$

The signal energy of each microphone signal, x, may be determined as:

$$M_m(i,j) = 10\log_{10}\sum_k M_{m,i,j,k}^2 \quad (3)$$

where m is the microphone index.

The correlation value, *C*, rarely reaches 0 or 1. Therefore, the correlation value *C* may be mapped to a more useful value using, for example, using a lookup table where the correlation value, *C*, is mapped to the attenuation amount, A, which may be a value between 0 and 20dB, e,g, 5dB, and is directly the maximum attenuation amount, $A_m(i,j)$, for each microphone time frame and frequency band.

The maximum attenuation is used if the microphone signal is sufficiently below the worst case signal energy, for example if the difference is 35 dB or more. In some embodiments no attenuation is used otherwise.

In some embodiments used attenuation may be smaller that the maximum attenuation when then difference between the microphone signal energy and the worst case signal energy is not 35 dB. The value of 35 dB is merely an example value and other values may be used for example in a range from 20 to 50 dB.

The attenuation amount A may be applied to the microphone signals in the frequency domain and converted back to the time domain for output.

Example embodiments may be used in various use cases, including, but not limited to:

- voice call echo cancellation;
- recording of audio (and possibly video) via a user device whilst the user listens to other audio (e.g., music) via an earphones device, wherein the other audio should not be recorded; and
- capture of audio voice commands for speech recognition processing whilst the user listens to other audio via an earphones device, wherein the other audio should not disrupt the speech recognition processing.

Example Apparatus

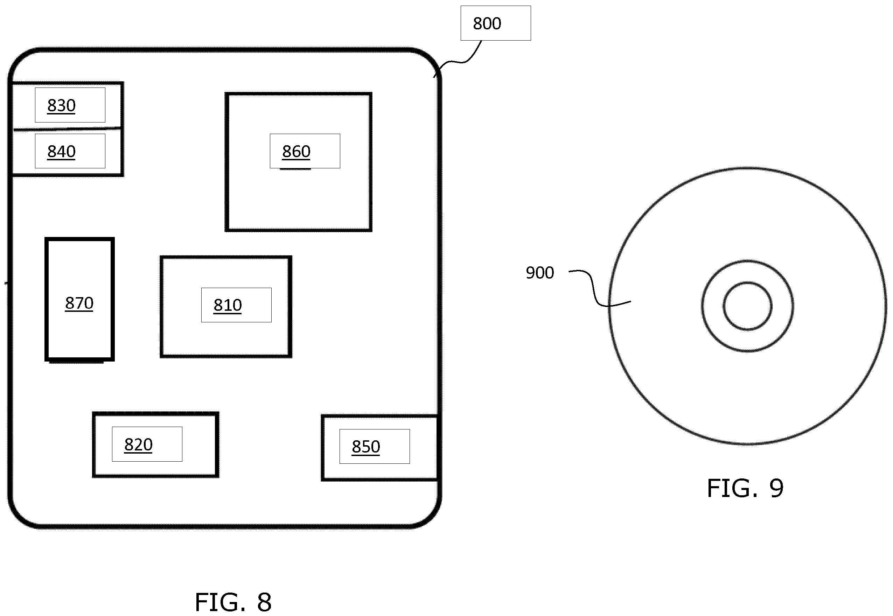

FIG. 8 illustrates an example apparatus 800 capable of supporting at least some embodiments. Illustrated is a device 800, which may comprise the first or second user device 106, 108 shown in FIGs. 1, 2 and 4. Comprised in device 800 is a processor 810, which may comprise, for example, a single- or multi-core processor wherein a single-core processor comprises one processing core and a multi-core processor comprises more than one processing core. The processor 810 may comprise, in general, a control device. The processor 810 may comprise more than one processor. The processor 810 may be a control device. A processing core may comprise, for example, a Cortex-A8 processing core manufactured by ARM Holdings or a Steamroller processing core produced by Advanced Micro Devices Corporation. The processor 810 may comprise at least one Qualcomm Snapdragon and/or Intel Atom processor. The processor 810 may comprise at least one Application-Specific Integrated Circuit, ASIC. The processor 810 may comprise at least one Field-Programmable Gate Array, FPGA. The processor 810 may be means for performing method steps in device 800. The processor 810 may be configured, at least in part by computer instructions, to perform actions.

A processor may comprise circuitry, or be constituted as circuitry or circuitries, the circuitry or circuitries being configured to perform phases of methods in accordance with

embodiments described herein. As used in this application, the term "circuitry" may refer to one or more or all of the following: (a) hardware-only circuit implementations, such as

implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the first or second user device 106, 108, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 800 may comprise a memory 820. The memory 820 may comprise random access memory and/or permanent memory. The memory 820 may comprise at least one RAM chip. The memory 820 may comprise solid-state, magnetic, optical and/or holographic memory, for example. The memory 820 may be at least in part accessible to processor 810. The memory 820 may be at least in part comprised in processor 810. The memory 820 may be means for storing information. The memory 820 may comprise computer instructions that processor 810 is configured to execute. When computer instructions configured to cause the processor 810 to perform certain actions are stored in the memory 820, and the device 800 overall is configured to run under the direction of the processor 810 using computer instructions from the memory 820, the processor 810 and/or its at least one processing core may be considered to be configured to perform said certain actions. The memory 820 may be at least in part comprised in the processor 810. The memory 820 may be at least in part external to the device 800 but accessible to the device 800.

The device 800 may comprise a transmitter 830. The device 800 may comprise a receiver 840. The transmitter 830 and the receiver 840 may be configured to transmit and receive, respectively, information in accordance with at least one cellular or non-cellular standard.

The transmitter 830 may comprise more than one transmitter. The receiver 840 may comprise more than one receiver. The transmitter 830 and/or the receiver 840 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 800 may comprise a Near-Field Communication, NFC, transceiver 850. The NFC transceiver 850 may support at least one NFC technology, such as NFC, Bluetooth, Wibree or similar technologies.

The device 800 may comprise a User Interface, UI, 860. The UI 860 may comprise at least one of a display, a keyboard, a touchscreen, a vibrator arranged to signal to a user by causing device 800 to vibrate, a speaker and a microphone. A user may be able to operate the device 800 via the UI 860, for example to accept incoming telephone calls, to originate telephone calls or video calls, to browse the Internet, to manage digital files stored in memory 820 or on a cloud accessible via the transmitter 830 and the receiver 840, or via NFC transceiver 850, and/or to play games.

The device 800 may comprise or be arranged to accept a user identity module 870. The user identity module 870 may comprise, for example, a Subscriber Identity Module, SIM, card installable in device 800. The user identity module 870 may comprise information identifying a subscription of a user of device 800. The user identity module 870 may comprise cryptographic information usable to verify the identity of a user of device 800 and/or to facilitate encryption of communicated information and billing of the user of the device 800 for communication effected via device 800.

The processor 810 may be furnished with a transmitter arranged to output information from processor 810, via electrical leads internal to the device 800, to other devices comprised in the device 800. Such a transmitter may comprise a serial bus transmitter arranged to, for example, output information via at least one electrical lead to the memory 820 for storage therein. Alternatively to a serial bus, the transmitter may comprise a parallel bus transmitter.

Likewise, the processor 810 may comprise a receiver arranged to receive information in

The processor 810, via electrical leads internal to the device 800, from other devices comprised in the device 800. Such a receiver may comprise a serial bus receiver arranged to, for example, receive information via at least one electrical lead from the receiver 840 for processing in the processor 810. Alternatively to a serial bus, the receiver may comprise a parallel bus receiver.

The device 800 may comprise further devices not illustrated in Figure 8. For example, where the device 800 comprises a smartphone, it may comprise at least one digital camera. Some devices 800 may comprise a back-facing camera and a front-facing camera, wherein the back-facing camera may be intended for digital photography and the front-facing camera for video telephony. The device 800 may comprise a fingerprint sensor arranged to authenticate, at least in part, a user of the device 800. In some embodiments, the device 800 lacks at least one device described above. For example, some devices 800 may lack a NFC transceiver 850 and/or user identity module 870.

The processor 810, memory 820, transmitter 830, receiver 840, NFC transceiver 850, UI 860 and/or user identity module 870 may be interconnected by electrical leads internal to the device 800 in a multitude of different ways. For example, each of the aforementioned devices may be separately connected to a master bus internal to the device 800, to allow for the devices to exchange information. However, as the skilled person will appreciate, this is only one example and depending on the embodiment various ways of interconnecting at least two of the aforementioned devices may be selected without departing from the scope of the present invention.

Figure 9 shows a non-transitory media 900 according to some embodiments. The non-transitory media 900 is a computer readable storage medium. It may be e.g. a CD, a DVD, a USB stick, a blue ray disk, etc. The non-transitory media 900 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

**1.** An apparatus comprising:

means for receiving one or more microphone signals from respective microphones for capturing first and second audio signals output by respective first and second loudspeakers;

means for correlating a first combination of the first and second audio signals with the one or more microphone signals ;

means for determining a time delay at which the first combination of the first and second audio signals is most similar to the one or more microphone signals;

means for causing alignment the first and second audio signals to the one or more microphone signals based on the time delay; and

means for causing attenuation the one or more microphone signals by an attenuation amount determined based at least in part on a second combination of the aligned first and second audio signals.

2. The apparatus of claim 1, wherein
the first combination of the first and second audio signals comprises a weighted sum of the first and second audio signals.

3. The apparatus of claim 1 or claim 2, wherein one or both of the first and second audio signals of the first combination have a smaller gain than the aligned first and second audio signals of the second combination.

4. The apparatus of any preceding claim, wherein

the means for correlating is configured to perform cross-correlation of the first combination of the first and second audio signals with the one or more microphone signals to determine a maximum similarity value, and
wherein the time delay is based on an amount of time shift of the first combination of the first and second audio signals relative to the one or microphone signals that produces the highest maximum similarity value.

5. The apparatus of any preceding claim, wherein
the first combination of the first and second audio signals is determined by correlating each of the one or more microphone signals with each of a set of first and second audio signal combinations, the first combination of the first and second audio signals being a combination which is most similar to at least one of the one or more microphone signals.

6. The apparatus of any preceding claim, wherein
the attenuation amount is further determined based on an amount of correlation between the one or more microphone signals and the first combination of the first and second audio signals.

7. The apparatus of any preceding claim, wherein
the means for receiving is configured to receive two or more microphone signals from two or more respective spaced-apart microphones.

8. The apparatus of claim 7, wherein
the two or more microphone signals are individually attenuated using respective attenuation amounts.

9. The apparatus of any preceding claim, further comprising:

means for converting the one or more microphone signals and the first combination of the first and second audio signals into frequency domain signals; and
means for dividing the frequency domain signals into sub-bands covering respective frequency ranges,
wherein correlating of the first combination of the first and second audio signals with the one or more microphone signals is performed for each sub-band.

10. The apparatus of claim 9, wherein
the attenuation amount is determined for each sub-band.

11. The apparatus of claim 9 or claim 10, wherein
the sub-bands cover a frequency range of 1 - 5 KHz.

12. The apparatus of any of claims 9 to 11,
wherein causing the attenuation of the one or more microphone signals is performed in the frequency domain, and the apparatus further comprises:
means for converting the attenuated one or more microphone signals to the time domain for output.

13. The apparatus of any preceding claim, wherein the attenuation amount has a maximum value of 20 dB.

14. The apparatus of any preceding claim, further comprising:
means for transmitting data representing the first and second audio signals to an earphones device which comprises the respective first and second loudspeakers.

**15.** A method, comprising:

receiving one or more microphone signals from respective microphones for capturing first and second audio signals output by respective first and second loudspeakers;

correlating a first combination of the first and second audio signals with the one or more microphone signals ;

determining a time delay at which the first combination of the first and second audio signals is most similar to the one or more microphone signals;

causing alignment of the first and second audio signals to the one or more microphone signals based on the time delay; and

causing attenuation of the one or more microphone signals by an attenuation amount determined based at least in part on a second combination of the aligned first and second audio signals.

FIG. 1

FIG. 2

FIG. 4

300

301 — Receiving one or more microphone signals from respective microphones for capturing first and second audio signals output by respective first and second loudspeakers

302 — Correlating a first combination of the first and second audio signals with the one or more microphone signals

303 — Determining a time delay at which the first combination of the first and second audio signals is most similar to the one or more microphone signals

304 — Causing alignment of the first and second audio signals to the one or more microphone signals based on the time delay

305 — Causing attenuation of the one or more microphone signals by an attenuation amount determined based at least in part on a second combination of the aligned first and second audio signals

FIG. 3

206

First Audio Signal

208

Second Audio Signal

d1  506

First Microphone Signal

d2  508

Second Microphone Signal

FIG. 5

EP 4 604 511 A1

FIG. 6

FIG. 7A

FIG. 7B

EP 4 604 511 A1

EP 4 604 511 A1

FIG. 8

FIG. 9

Europäisches
Patentamt

European
Patent Office

Office européen
des brevets

## EUROPEAN SEARCH REPORT

**Application Number**

EP 25 15 2475

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/170706 A1 (FALLER CHRISTOF [CH]) 17 July 2008 (2008-07-17) * paragraph [0040] - paragraph [0057] * * figures 1-5,7-9 * | 1-15 | INV. H04M9/08 H04R3/00 H04S7/00 |
| A | US 9 787 825 B1 (AYRAPETIAN ROBERT [US] ET AL) 10 October 2017 (2017-10-10) * column 1, line 50 - column 4, line 21 * * figure 1 * | 7,8 | ADD. G10L21/0208 |
| A | US 2009/214048 A1 (STOKES III JACK W [US] ET AL) 27 August 2009 (2009-08-27) * paragraph [0018] - paragraph [0033] * * paragraph [0068] * * figures 1-3,5-8 * | 9-12,14 | |

TECHNICAL FIELDS
SEARCHED      (IPC)

H04Q
G10L
H04M

The present search report has been drawn up for all claims

| Place of search | Date of completion of the search | Examiner |
|---|---|---|
| Munich | 9 July 2025 | Meiser, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 604 511 A1**

## ANNEX TO THE EUROPEAN SEARCH REPORT
## ON EUROPEAN PATENT APPLICATION NO.

EP 25 15 2475

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| US 2008170706 A1 | 17-07-2008 | US 2008170706 A1<br>WO 2006111370 A1 | 17-07-2008<br>26-10-2006 |
| US 9787825 B1 | 10-10-2017 | NONE | |
| US 2009214048 A1 | 27-08-2009 | NONE | |

For more details about this annex : see Official Journal of the European Patent Office, No. 12/82